# EUROPÄISCHE PATENTSCHRIFT

(11) **EP 1 470 088 B1**
(45) Veröffentlichungstag und Bekanntmachung des Hinweises auf die Patenterteilung: **28.12.2005**
(21) Anmeldenummer: 03709691.4
(22) Anmeldetag: 21.01.2003
(51) Int. Cl.: C03C 12/00, C03C 3/062, C03C 3/091, C03C 3/093, C03C 8/22, C08K 3/00, C09D 5/14

(54) **ANTIMIKROBIELLES, WASSERUNLÖSLICHES SILICATGLASPULVER UND MISCHUNG VON GLASPULVERN**
ANTIMICROBIAL, WATER-INSOLUBLE SILICATE GLASS POWDER AND MIXTURE OF GLASS POWDERS
POUDRE DE VERRE DE SILICATE ANTIMICROBIENNE, INSOLUBLE DANS L'EAU ET MELANGE DE POUDRES DE VERRE

(30) Priorität: 24.01.2002 DE 10202630
(43) Veröffentlichungstag der Anmeldung: 27.10.2004
(73) Patentinhaber: Schott AG, 55122 Mainz (DE)
(72) Erfinder: BEIER, Wolfram, 55270 Essenheim (DE); FECHNER, Jörg, Hinrich, 55118 Mainz (DE); SCHNELL, Rupert, 67551 Worms (DE); ZIMMER, José, 55218 Ingelheim (DE)
(74) Vertreter: Sawodny, Michael-Wolfgang
(86) Internationale Anmeldenummer: PCT/EP2003/000559
(87) Internationale Veröffentlichungsnummer: WO 2003/062163

(56) Entgegenhaltungen:
- WO-A-91/17965
- PATENT ABSTRACTS OF JAPAN vol. 1999, no. 13, 30. November 1999 (1999-11-30) -& JP 11 209143 A (ISHIZUKA GLASS CO LTD), 3. August 1999 (1999-08-03)
- PATENT ABSTRACTS OF JAPAN vol. 018, no. 575 (C-1268), 4. November 1994 (1994-11-04) -& JP 06 211542 A (IWAKI GLASS KK), 2. August 1994 (1994-08-02)
- PATENT ABSTRACTS OF JAPAN vol. 1997, no. 01, 31. Januar 1997 (1997-01-31) -& JP 08 245237 A (NIPPON SHEET GLASS CO LTD), 24. September 1996 (1996-09-24)
- PATENT ABSTRACTS OF JAPAN vol. 1998, no. 02, 30. Januar 1998 (1998-01-30) & JP 09 263423 A (NIPPON FUEROO KK), 7. Oktober 1997 (1997-10-07)

## Beschreibung

Die Erfindung betrifft antimikrobielle, wasserunlösliche Silicatglaspulver und Mischungen aus Glaspulvern. Unter antimikrobiellen Glaspulvern werden Glaspulver verstanden, die beispielsweise biozid, bakteriozid und/oder fungizid und/oder algizid wirken. Unter Glaspulvern werden in dieser Anmeldung allgemein Gläser in Pulverform oder Faserform oder in Form feiner Partikel verstanden.

Gläser mit bioaktiver und teilweise auch antimikrobieller Wirkung werden bei L.L. Hensch, J. Wilson, An Introduction to Bioceramics, World Scientific Publ., 1993, als Bioglas beschrieben. Derartiges Bioglas zeichnet sich durch Bildung von Hydroxylappatitschichten in wäßrigen Medien aus.

Bei den aus dem Stand der Technik bekannten Gläsern bzw. Glaspulvern beruht die antibakterielle Wirkung auf zugesetzten Schwermetallionen wie z.B. Cu, Zn oder Ag. Die antibakterielle Wirkung geht bei diesen Verbindungen nicht von Glas, sondern von den freigesetzten Metallionen aus.

So werden in der US 5,290,544 wasserlösliche Gläser für die Anwendungen in kosmetischen Produkten mit sehr geringen SiO₂ und sehr hohen B₂O₃ bzw. hohen P₂O₅-Gehalten beschrieben. Die Gläser weisen Silberkonzentrationen größer 0,5 Gew.-% auf. Diese Gläser besitzen eine extrem niedrige hydrolytische Beständigkeit und neigen dazu, sich in Wasser komplett aufzulösen. Die hierbei freiwerdenden Ag- und/oder Cu-Ionen wirken antibakteriell. Auch in der JP-A-92178433 wird ein wasserlösliches Glaspulver mit SiO₂ < 37 Gew.% als Polymerzusatz mit hohen Silberkonzentrationen > 1 Gew.% beschrieben.

In der US 6,143,318 werden silberhaltige Phosphatgläser beschrieben, die als antimikrobielles Material für die Wundinfektionsbehandlung mit Kombinationen aus Cu, Ag und Zn verwendet werden. Hierbei handelt es sich ebenfalls um wasserlösliche Gläser, die niedrige SiO₂-Konzentrationen und sehr hohe P₂O₅-Gehalte aufweisen.

Gläser mit einem hohen Phosphoranteil, die weitgehend frei von Alkalibestandteilen sind, sind in der EP 1116698 und der JP 08-175843 beschrieben.

Diese Gläser sind aufgrund ihrer niedrigen hydrolytischen Beständigkeit nur sehr beschränkt für eine Mahlung in wäßrigen Medien geeignet.

Bei den aus der WO 01/03650 bekannten Gläsern handelt es sich um bioaktive Gläser mit einem signifikanten Phosphoranteil > 1 Gew.-%.

Die wesentlichen Eigenschaften von bioaktivem Glas sind dem Fachmann bekannt und beispielsweise in der US-A 5,074,916 beschrieben. Danach unterscheidet sich bioaktives Glas von herkömmlichen Kalk-Natrium-SilicatGläsern dadurch, daß es lebendes Gewebe bindet.

Bioaktives Glas bezeichnet ein Glas, das eine feste Bindung mit Körpergewebe eingeht, wobei eine Hydroxyl-Apatitschicht ausgebildet wird.

Nachteilig an diesen bioaktiven Gläsern wiederum ist der hohe Phosphoranteil, der beim Erschmelzen der Gläser zu Fertigungsproblemen und zu einer niedrigen hydrolytischen Beständigkeit führt.

Ein weiterer Nachteil der im Stand der Technik beschriebenen Gläser ist, daß diese Substanzen unerwünschte Nebenwirkungen aufweisen und gesundheitlich nicht unbedenklich sind. Sie können allergieauslösend, hautreizend oder in anderer Form belastend für den menschlichen Körper oder die Umwelt sein.

Insbesondere haben Pulver aus derartigen Gläsern bei Anwendung in bestimmten Kunststoffen oder Lacken umfassend Polymere den Nachteil, daß die Polymerkette aufgebrochen und damit der Polymerwerkstoff lokal zerstört wird. Hierdurch werden die mechanischen und optischen Eigenschaften des Polymerwerkstoffes nachhaltig beeinträchtigt.

Aufgabe der Erfindung ist es, Glaspulver anzugeben, die die Nachteile des Standes der Technik vermeiden, insbesondere ohne großen Aufwand darstellbar sind.

Diese Aufgabe wird durch ein Glaspulver gemäß Anspruch 1 gelöst.

Das erfindungsgemäße Glas kann in großtechnischen Maßstab mit Standardverfahren hergestellt werden.

Die Ausgangsgläser können aufgrund ihrer hydrolytischen Beständigkeit in unterschiedlichen Mahlmedien, zum Beispiel Wasser, gemahlen werden.

Mit dem antimikrobiellen Glaspulver kann eine Konservierung von Produkten selbst erzielt oder eine antimikrobielle Wirkung nach außen erreicht werden.

Ein besonderer Vorteil des erfindungsgemäßen Glases ist, daß das Glas aufgrund des Schmelz- und Heißformgebungsverhaltens geeignet ist, um in entsprechenden großtechnischen Anlagen hergestellt werden zu können.

Ein weiterer Vorteil ist, daß derartige Silicatglaspulver als Zuschlagstoffe in Kunststoffe oder Lacke umfassend Polymere eingebracht werden können, ohne daß die Polymerketten aufgebrochen werden. Insbesondere werden auch die Polymerketten, zum Beispiel in Polycarbonaten, leicht angegriffen, so daß die mechanischen und optischen Eigenschaften von Polycarbonaten durch die erfindungsgemäßen Silicatglaspulver als Zuschlagstoffe nicht nachteilig beeinflußt werden.

Da die Prozeßtemperaturen bzw. die Viskosität des Glases niedrig ist, können kostengünstige Werkstoffe bei Schmelze und Heißformgebung eingesetzt werden.

Neben der Herstellung über ein Schmelzverfahren sind auch alternative Herstellungsverfahren über die Sol-Gel- oder Reaktionssinter-Route denkbar.

Die antimikrobielle Wirkung des erfindungsgemäßen Glaspulvers ist extrem stark. Je geringer die mittlere Partikelgröße des Glaspulvers, desto höher die antimikrobille Wirkung wegen der Erhöhung der reaktiven Oberfläche des Glases. Die antimikrobiellen Eigenschaften werden auch bei Gläsern gefunden, die als Halbzeug eine relativ hohe hydrolytische Beständigkeit besitzen.

Bei den erfindungsgemäßen Gläsern werden durch Reaktionen an der Oberfläche des Glases Erdalkalien des Glases durch H⁺-Ionen des wäßrigen Mediums ausgetauscht. Die antimikrobielle Wirkung des Ionenaustausches beruht unter anderem auf einer Erhöhung des pH-Wertes und dem osmotischen Effekt auf Mikroorganismen.

Ionenaustauschbare Gläser gemäß der Erfindung wirken in wäßrigen Medien antimikrobiell durch pH-Wert-Erhöhung durch Ionenaustausch zwischen einem Metallion, wie beispielsweise einem Erdalkalimetallion und den H⁺-Ionen der wäßrigen Lösung sowie durch ionenbedingte Beeinträchtigung des Zellwachstums (osmotischer Druck, Störung von Stoffwechselvorgängen der Zellen). Gemahlene Glaspulver mit Teilchen geringer Partikelgröße und großer Oberfläche zeigen eine drastische Reaktivitätserhöhung, woraus, durch den schon beschriebenen Ionenaustausch, eine starke antimikrobielle Wirkung resultiert. Die antimikrobielle Wirkung wird bei den erfindungsgemäßen Glaspulvern durch den Ionenaustausch erzielt und nicht durch die antimikrobille Wirkung der Schwermetallionen. Diese können aber als Zusatz die antimikrobielle Wirkung verstärken.

Durch einen Mahlprozeß können Partikelgrößen < 100 µm erhalten werden. Als zweckmäßig haben sich Partikelgrößen < 50 µm bzw. 20 µm erwiesen. Besonders geeignet sind Partikelgrößen < 10 µm sowie kleiner 5 µm. Als ganz besonders geeignet haben sich Partikelgrößen < 1 µm herausgestellt.

Der Mahlprozeß kann sowohl trocken als auch mit wäßrigen und nichtwäßrigen Mahlmedien durchgeführt werden.

Je nach Partikelgröße, Konzentration und der Zusammensetzung des Pulvers werden pH-Werte von bis zu 13 erreicht.

Das Glas enthält SiO₂ als Netzwerkbildner, bevorzugt zwischen 35 bis 70 Gew.-%. Bei niedrigen Konzentrationen nimmt die hydrolytische Beständigkeit stark ab, so daß das Mahlen in wäßrigen Medien nicht mehr ohne signifikante Auflösung des Glases gewährleistet ist.

Erdalkalioxide können insbesondere hinzugesetzt werden, um den Ionenaustausch zu erhöhen und so die antimikrobielle Wirkung zu verstärken.
Die Menge an Al₂O₃ kann zur Erhöhung der chemischen Beständigkeit der Kristallisationsstabilität sowie der Steuerung der antimikrobiellen Wirkung bis zu maximal 25 Gew.-% hinzugegeben werden.

B₂O₃ wirkt als Netzwerkbildner und kann auch der Steuerung der antimikrobiellen Wirkung dienen.

Ag₂O, CuO, ZnO können als antimikrobiell wirkende Zusätze, die synergistisch die intrinsische antimikrobielle Wirkung des Grundglases verstärken, zugegeben werden.

Durch eine Kombination der pH-Wirkung und der Ag, Cu oder Zn-Abgabe kann eine erheblichen Steigerung der antimikrobiellen Wirkung erzielt werden, die über die Summe der Einzelwirkungen deutlich hinausgeht Die in das Produkt freigesetzte Konzentration von Ag, Cu, Zn-Ionen kann hierbei deutlich unter 1 ppm liegen.

Die Einbringung des Ag, Cu, Zn kann hierbei entweder bereits bei der Schmelze durch entsprechende Salze erfolgen oder aber durch Ionenaustausch des Glases nach der Schmelze.

Antimikrobielle Glaspulver sind aufgrund ihrer bioziden, bakterioziden, und fungiziden Wirkung als Zuschlagstoff oder Füllstoff für die unterschiedlichsten Zwecke geeignet. Bei der Anwendung treten jedoch Probleme auf, insbesondere was die Wirkungsintensität Ober der Zeit betrifft.

Erfindungsgemäß wird dieser Aspekt der Erfindung dadurch gelöst, daß Mischungen von Glaspulvern, die Glaspulver mit unterschiedlichen zeitlichen Abgabeverhalten der Wirkkomponente umfassen, zur Verfügung gestellt werden.

Derartige Mischungen können beispielsweise binäre, tertiäre oder quarternäre Mischungen unterschiedlicher Fraktionen von Glaspulvern sein. Besonders bevorzugt ist es, wenn es sich bei der Mischung um eine binäre Mischung aus zwei Fraktionen von Glaspulvern mit unterschiedlichem zeitlichem Abgabeverhalten handelt.

Um derartige Mischungen auch in Kunststoffprodukten oder Produkten, die Polymerwerkstoffe enthalten, einsetzen zu können, werden Glaspulver eingesetzt, die völlig alkalifrei oder alkaliarm sind und als "praktisch alkalifrei" bezeichnet werden. Bevorzugt ist der Gesamt-Gehalt beispielsweise von Natrium- und/oder Kaliumoxid kleiner 1,5 Gew.% .

Die Idee der Mischung von Glaspulvern mit unterschiedlicher Freisetzungsrate zur Erzielung einer möglichst gleichmäßigen bioziden Wirkung ist aber nicht auf alkalifreie Gläser beschränkt. So kann in anderen Anwendungsgebieten eine Alkalifreiheit der Gläser nicht erforderlich sein.

Das eine Glaspulver bei einer binären Mischung umfaßt eine erste Fraktion einer Komponenten mit niedrigen Freisetzungsraten und demgemäß einer kontinuierlichen antimikrobiellen Wirksamkeit, und das andere Glaspulver der zweiten Fraktion Komponenten mit einer raschen Freisetzungsrate, und demgemäß mit einer antimikrobiellen Kurzzeitwirkung.

Für eine biozide Sofortwirkung haben sich Glaspulver von Erdalkaliboratgläsem, Erdalkaliphosphatgläsern oder Zinkphosphatgläsern als besonders bevorzugt erwiesen.

Die antimikrobielle bzw. bioziden Eigenschaft in den Glaspulvern werden durch Ionen oder Atome der Elemente Ag, Zn Cu, Ce, Te oder I mit Gesamtanteilen < 2,5 Gew.-% erreicht. Die biozide Wirkung tritt bspw.gegenüber Bazillen, Pilzen, Algen und anderen Kleinlebewesen ein.

Bevorzugt werden eine oder mehrere biozid wirkende Komponenten ausgewählt aus nachfolgenden Komponenten: Ag₂O, CuO, Cu₂O, TeO₂, ZnO, CeO₂ und I dem Grundglas des Glaspulvers zugegeben werden.

Glaspulver mit langsamer Freisetzung, und somit mit Langzeitwirkung, sind vor allem Glaspulver von Silicatgläsern. Auch diese können die zuvor genannten Komponenten, die die antimikrobielle Wirkung verstärken, umfassen. Bevorzugt sind in beiden Fällen die Glaspulver frei oder fast frei von Alkalikomponenten.

Wird ein Silicatglaspulver für langsame Freisetzung verwendet, so wird bevorzugt ein Silicatglas als Ausgangsglas mit den folgenden Komponenten verwendet:

| | |
|---|---|
| SiO₂ | 30 - 70 Gew.-% |
| Na₂O | 0 - 1 Gew.-% |
| K₂O | 0 - 1 Gew.-% |
| MgO | 5 - 40 Gew.-% |
| CaO | 0 - 40 Gew.-% |
| SrO | 0 - 40 Gew.-% |
| BaO | 0 - 40 Gew.-% |
| Al₂O₃ | 0 - 25 Gew.-% |
| P₂O₅ | 0 - 20 Gew.-% |
| B₂O₃ | 0 - 20 Gew.-% |

Die antimikrobielle bzw. bioziden Eigenschaft in den Glaspulvern werden durch Ionen oder Atome der Elemente Ag, Zn Cu, Ce, Te oder I mit Gesamtanteilen < 2,5 Gew.-% erreicht. Die biozide Wirkung tritt bspw.gegenüber Bazillen, Pilzen, Algen und anderen Kleinlebewesen ein.

Als biozid wirkende Komponenten können dem Grundglas des Glaspulvers zugegeben werden: Ag₂O, CuO, Cu₂O, TeO₂, ZnO, CeO₂ und I.

Bei den beiden Fraktionen von Glaspulvern kann es zweckmäßig sein, die Fraktion mit der höheren Freisetzungsrate der bioziden Komponenten besonders bei erhöhter Feuchtigkeit wirksam werden zu lassen.

Die Partikelgröße der verschiedenen Glaspulver kann unterschiedlich sein. So ist die mittlere Partikelgröße eines Glaspulvers mit Komgrößenverteilung kleiner 100 µm, bevorzugt kleiner 30 µm, besonders bevorzugt kleiner 5 µm, ganz bevorzugt kleiner 1 µm.

Es kann zweckmäßig sein, eine Glaspulvermischung aus zwei Fraktionen zu verwenden, wobei sich die mittlere Partikelgröße aufgrund der unterschiedlichen Komgrößenverteilungen der beiden Fraktionen deutlich unterscheiden, insbesondere dergestalt, daß die Fraktion mit der geringeren Freisetzungsrate, d.h. der ersten Freisetzungsrate, der bioziden Komponenten aus Partikeln besteht, die um den Faktor 2 bis 5 kleiner sind als die Partikel des Glaspulvers mit der größeren Freisetzungsrate, d.h. der zweiten Freisetzungsrate, der bioziden Komponenten.

In einer fortgebildeten Ausführungsform kann vorgesehen werden, daß sich die Komgrößenverteilungen der beiden Fraktionen deutlich unterscheiden, insbesondere dergestalt, daß die Fraktion mit der geringeren Freisetzungsrate der bioziden Komponenten aus Partikeln besteht, die um den Faktor 5 bis 20 kleiner sind als die Partikel des Glaspulvers mit der größeren Freisetzungsrate der bioziden Komponenten.

Femer kann eine Partikelbemessung derart vorgenommen werden, daß die Fraktion mit der geringeren Freisetzungsrate der bioziden Komponenten aus Partikeln besteht, die um den Faktor 2 bis 5 größer sind als die Partikel des Glases mit der größeren Freisetzungsrate der bioziden Komponenten.

Auch ist es denkbar, daß sich die Korngrößenverteilungen der beiden Fraktionen deutlich unterscheiden, insbesondere dergestalt, das die Fraktion mit der geringeren Freisetzungsrate der bioziden Komponenten aus Partikeln besteht, die um den Faktor 5 bis 20 größer sind als die Partikel des Glases mit der größeren Freisetzungsrate der bioziden Komponenten.

Die antimikrobiellen Glaspulver, insbesondere die Mischungen mit biozider Wirkung gemäß der Erfindung kommen für folgende Anwendungszwecke, insbesondere als Zuschlagstoffe, in Betracht:
für Kunststoffe in Außenanwendungen, wie zum Beispiel Carportdächer;
für Brand- und Einlegesohlen in Schuhen zur Geruchsvermeidung bzw. gegen Fußpilz;
für Hygieneanwendungen;
für Medizinanwendungen wie Katheter, Kanülen;
für Farben und Kunststoffe für Unterwasseranwendungen;
für Industrieanwendungen, zum Beispiel Kühlkreisläufe mit Kunststoffrohren zum Unterdrücken der hier oft störenden Algenbildung;
für Kunststoffe auf Polyesterbasis
für Umfassungen, beispielsweise Kunstoffrahmen von KühlschrankEinlegeböden
Sensoren für Haushaltsgeräte
Schaltereinrichtungen, beispielsweise Schaltknöpfe für Haushaltsgeräte
Umfassungen, z,B. Dichtungen von Glasoberflächen von Getränkeautomaten
für Desinfektionsgeräte in der Küche
für Umfassungen, z.B. Dichtungen von Backofen-Frontscheiben
für Mikrowellengeräte
für Dunstabzugshauben
für Umfassungen, z.B. Kunststoffrahmen von Glaskeramik-Kochflächen
für Umfassungen von Glasoberflächen in Saunen, Solarien, Duschen
für Fitnessgeräte
für Geräte der Medizintechnik wie Personenwaagen etc.
für Oberflächen von Anzeigegeräten wie Displays, Touchscreens etc.
für Umfassungen von Möbelglas
für Kunststoffteile von Spielautomaten
für Umfassungen, insbesondere Dichtungen von Bauglas, insbesondere Innentüren

Bei der Anwendung für Kunststoffe haben sich besonders günstige Wirkungen gezeigt. So bleiben beispielsweise die mechanischen und optischen Eigenschaften von Polycarbonat weitgehend unbeeinträchtigt. Die Esterbindung der Polymerkette bleibt dabei unversehrt und wird nicht aufgebrochen.

Die erfindungsgemäßen Mischungen eignen sich insbesondere als Zuschlagstoffe zur Herstellung antimikrobieller Oberflächen, wie bspw. Umfassungen von Glas-oder Glaskeramikteilen. Bei den Umfassungen kann es sich bspw. um Dichtungen oder Kunststoff-Rahmenteile handeln. Insbesondere findet das Glas Verwendung als Zumischung zu Kunststoffen, die zum Herstellen von Kunststoffrahmen für Kühlschrankeinlegeböden verwendet werden. Auch kann das Glas als Zumischung zu Kunststoffen, die für Kunststoffschalter, beispielsweise an Herden, verwendet werden, eingesetzt werden.

Nachfolgend soll die Erfindung anhand von Ausführungsbeispielen näher beschrieben werden:

### Ausführungsbeispiele

Aus den Rohstoffen wurde das Glas in einem Platintiegel bei 1600°C erschmolzen und zu Halbzeug oder Ribbons, d.h. Glasbändern, verarbeitet. Die Ribbons wurden in einer Trommelmühle auf Komgrößen von bis zu 4 µm gemahlen. Korngrößen unter 4 µm wurden mit Attritormahlungen in wäßrigem oder nicht wäßrigem Medium erreicht. Die Zusammensetzung von erfindungsgemäßen Ausgangsgläsern aus denen durch Mahlung Glaspulver hergestellt werden sind in nachfolgender Tabelle 1 angegeben.

**Tabelle 1:**

| Zusammensetzungen von erfindungsgemäßen Ausgangsgläsem: | | |
|---|---|---|
| | Ausführungs-beispiel 1 | Ausführungs-beispiel 2 |
| SiO₂ | 56,0 | 59,85 |
| Al₂O₃ | 15,8 | 16,50 |
| CaO | 8,4 | 13,50 |
| MgO | 5,6 | 0,0 |
| Fe₂O₃ | | |
| B₂O₃ | 4,8 | 0,3 |
| SrO | | |
| BaO | 8,4 | 7,85 |
| ZrO₂ | | 1,0 |
| Ag₂O | 1,0 | 1,0 |

Die angegebenen Zusammensetzungen sind als beispielhaft zu verstehen für Gläser mit einem Alkalioxidgehait kleiner 1,5 Gew-% und keineswegs auf die angegebenen speziellen Ausführungsbeispiele beschränkt.

## Patentansprüche

1. Antimikrobielles, wasserunlösliches Silicatglaspulver, wobei das Ausgangsglas
| | |
|---|---|
| SiO₂ | 30 - 70 Gew.-% |
| Na₂O | 0 - 1 Gew.-% |
| K₂O | 0 - 1 Gew.-% |
| MgO | 0 - 40 Gew.-% |
| CaO | 0 - 40 Gew.-% |
| SrO | 0 - 40 Gew.-% |
| BaO | 0 - 40 Gew.-% |
| Al₂O₃ | 0 - 25 Gew.-% |
| P₂O₅ | 0 - 20 Gew.-% |
| B₂O₃ | 0 - 20 Gew.-% |
umfaßt, wobei
die Summe der Alkalioxidgehalte kleiner 1,5 Gew.-% in der Gesamtzusammensetzung des Ausgangsglases ist und das Ausgangsglas als biozid wirkende Komponente des weiteren lonen oder Atome der Elemente Ag, Zn Cu, Ce, Te oder I mit Gesamtanteilen < 2,5 Gew.-% umfassen,
**dadurch gekennzeichnet, daß**
das Silicatglaspulver Glaspartikel umfaßt und die Größe der Glaspartikel < 100 µm ist.

2. Antimikrobielles, wasserunlösliches Silicatglaspulver nach Anspruch 1, **dadurch gekennzeichnet, dass** mindestens 5 Gew.-% MgO in der Glaszusammensetzung enthalten sind.

3. Komponenten umfassen:
Ag₂O, CuO, Cu₂O, TeO₂, ZnO, CeO₂, I,
wobei die Summe dieser Komponenten größer als 0,1 Gew.%, aber kleiner als 2,5 Gew.-% ist.

4. Antimikrobielles, wasserunlösliches Silicatglaspulver nach einem der Ansprüche 1 bis 3, **dadurch gekennzeichnet, dass** die Größe der Glaspartikel ≤ 20 µm, insbesondere ≤ 10 µm ist.

5. Antimikrobielles, wasserunlösliches Silicatglaspulver nach einem der Ansprüche 1 bis 3, **dadurch gekennzeichnet, dass** die Größe der Glaspartikel < 5 µm ist.

6. Antimikrobielles, wasserunlösliches Silicatglaspulver nach einem der Ansprüche 1 bis 3, **dadurch gekennzeichnet, dass** die Größe der Glaspartikel < 1 µm ist.

7. Verwendung eines antimikrobiellen Glaspulvers oder Mischungen von Glaspulvern nach einem der Ansprüche 1 bis 6 als funktioneller Zusatzstoff oder Füllstoff für thermoplastische, duroplastische und elastomere Kunststoffe, insbesondere für Kunststoffe auf Polycarbonatbasis oder Polyesterbasis.

8. Verwendung eines antimikrobiellen Glaspulvers nach einem der Ansprüche 1 bis 6 in polymerhaltigen Farben und Lacken.

9. Kunststoffhalbzeug oder Kunststoffprodukt mit biozider Eigenschaft, hergestellt aus oder unter Verwendung von thermoplastischen, duroplastischen oder elastomeren Kunststoffen, denen ein antimikrobielles Glaspulver gemäß einem der Ansprüche 1 bis 6 zugesetzt ist.

10. Kunststoffhalbzeug oder Kunststoffprodukt nach Anspruch 9, **dadurch gekennzeichnet, dass** der Zusatz von antimikrobiellem Glas ausschließlich oder hauptsächlich in den oberflächennahen Partien des Kunststoffhalbzeugs oder des Kunststoffprodukts erfolgte.

## Claims

1. An antimicrobial, water insoluble silicate glass powder, wherein the starting glass comprises:
| | |
|---|---|
| SiO₂ | 30 - 70 weight-% |
| Na₂O | 0 - 1 weight-% |
| K₂O | 0 - 1 weight-% |
| MgO | 0 - 40 weight-% |
| CaO | 0 - 40 weight-% |
| SrO | 0 - 40 weight-% |
| BaO | 0 - 40 weight-% |
| Al₂O₃ | 0 - 25 weight-% |
| P₂O₅ | 0 - 20 weight-% |
| B₂O₃ | 0 - 20 weight-% |
wherein the sum of alkali oxides contents is less than 1.5 weight-% in the total composition of the starting glass and the starting glass as biocide effective component further comprises ions or atoms of the elements Ag, Zn, Cu, Ce Te or I with total contents < 2.5 weight-%, **characterized in that** the silicate glass powder comprises glass particles and the size of the glass particles is < 100 µm.

2. The antimicrobial water insoluble silicate glass powder according to claim 1, **characterized in that** at least 5 weight-% MgO is contained in the glass composition.

3. The antimicrobial water insoluble silicate glass powder according to claim 1, **characterized in that**, the biocide effective components comprise one or more of the following components:
Ag₂O, CuO, Cu₂O, TeO₂, ZnO, CeO₂, I,
wherein the sum of these components is greater than 0.1 weight-%, but less than 2.5 weight-%.

4. The antimicrobial water insoluble silicate glass powder according to one of claims 1 to 3, **characterized in that** the size of the glass particles being ≤ 20 µm, particularly ≤ 10 µm.

5. The antimicrobial water insoluble silicate glass powder according to one of claims 1 to 3, **characterized in that** the size of the glass particles being < 5 µm.

6. The antimicrobial water insoluble silicate glass powder according to one of claims 1 to 3, **characterized in that** the size of the glass particles being < 1 µm.

7. Use of an antimicrobial glass powder or mixture of glass powders according to one of claims 1 to 6 as functional additive or filler material for thermoplastic, duroplastic and elastomer plastics, particularly plastics based on polycarbonate or polyester.

8. Use of an antimicrobial glass powder according to one of claims 1 to 6 in polymer containing paints and lacquers.

9. A half-finished plastic product or plastic product having biocide properties produced from or produced using thermoplastic, duroplastic or elastomer plastics, to which an antimicrobial glass powder according to one of claims 1 to 6 has been added.

10. The half-finished plastic product or plastic product according to claim 9, **characterized in that** the addition of antimicrobial glass is exclusively or basically performed in the parts of the half-finished plastic product or the plastic product being near to the surface.

## Revendications

1. Verre pulvérisé silicieux, insoluble dans l'eau, antimicrobe, dont la composition de verre au début comprend en pourcentage en poids:
| | |
|---|---|
| SiO₂ | 30 à 70 |
| Na₂O | 0 à 1 |
| K₂O | 0 à 1 |
| MgO | 0 à 40 |
| CaO | 0 à 40 |
| SrO | 0 à 40 |
| BaO | 0 à 40 |
| Al₂O₃ | 0 à 25 |
| P₂O₅ | 0 à 20 |
| B₂O₃ | 0 à 20 |
dont la somme des teneurs des oxides d'alcali dans la composition totale de verre au début est inférieure de 1,5 pourcentage en poids et la composition de verre au début comme composant efficace biocide comprend en outre des ions ou atomes des éléments Ag, Zn, Cu, Ce, Te ou I avec des parts totales < 2,5 en pourcentage en poids, **caractérisé en ce que** le verre pulvérisé silicieux comprend des particules du verre et la taille des particules du verre est < 100 µm.

2. Verre pulverisé silicieux, insoluble dans l'eau, antimicrobe selon la revendication 1, **caractérisé en ce que** au moins 5 pourcentage en poids MgO sont compris dans la composition totale.

3. Verre pulvérisé silicieux, insoluble dans l'eau, antimicrobe, selon la revendication 1, **caractérisé en ce que** les composants efficaces biocides comprennent un ou plusiers des composants suivants :
Ag₂O, CuO, Cu₂O, TeO₂, ZnO, CeO₂, I,
la somme des composants est supérieur à 0,1 pourcentage en poids, mais inférieur à 2,5 pourcentage en poids.

4. Verre pulverisé silicieux, insoluble dans l'eau, antimicrobe, selon l'une des revendications 1 à 3, **caractérisé en ce que** la taille des particules de verre est ≤ 20 µm, de préférence ≤ 10 µm.

5. Verre pulverisé silicieux, insoluble dans l'eau, antimicrobe, selon l'une des revendications 1 à 3, **caractérisé en ce que** la taille des particules de verre est < 5 µm.

6. Verre pulverisé silicieux, insoluble dans l'eau, antimicrobe, selon l'une des revendications 1 à 3, **caractérisé en ce que** la taille des particules de verre est < 1 µm.

7. Utilisation d'un verre pulvérisé antimicrobe ou des mixtures des verres pulverisés selon l'une des revendications 1 à 6 comme un additif fonctionnel ou un matériel de remplissage pour des matières plastiques thermoplastiques, duroplastiques et elastomères, de préférence pour des matières plastiques du base de carbonate polymère ou d'ester polymère.

8. Utilisation d'un verre pulverisé antimicrobe selon l'une des revendications 1 à 6 pour des couleurs et des laques qui contiennent des polymères.

9. Des matières plastiques demi-finis ou des produits des matières plastiques avec des qualités biocides, produit de ou d'utliisation des matières plastiques thermoplastiques, duroplastiques et elastomères, dont un verre pulverisé antimicrobe est ajouté.

10. Des matières plastiques demi-finis ou des produits des matières plastiques selon la revendication 9, **caractérisé en ce que** le supplément de verre antimicrobe est effectué exclusivement ou principalement dans les part prés de surface des matières plastiques demi-finis ou des produits des matières plastiques.
